# EUROPEAN PATENT SPECIFICATION

(11) **EP 2 863 772 B1**
(45) Date of publication and mention of the grant of the patent: **22.06.2016**
(21) Application number: 13708609.6
(22) Date of filing: 26.02.2013
(51) Int. Cl.: A46B 9/04, A46D 3/00, B29C 45/00

(54) **ORAL CARE IMPLEMENT AND METHOD OF FORMING THE SAME**
MUNDPFLEGEVORRICHTUNG UND VERFAHREN ZUR HERSTELLUNG DAVON
INSTRUMENT DE SOINS BUCCAUX ET SON PROCÉDÉ DE FABRICATION

(30) Priority: 20.06.2012 US 201261662092 P
(43) Date of publication of application: 29.04.2015
(73) Proprietor: Colgate-Palmolive Company, New York, NY 10022 (US)
(72) Inventor: MOSKOVICH, Robert, East Brunswick, New Jersey 08816 (US); LEE, David, East Brunswick, New Jersey 08816 (US)
(74) Representative: Thum, Bernhard
(86) International application number: PCT/US2013/027751
(87) International publication number: WO 2013/191747

(56) References cited:
- DE-A1- 19 857 053
- US-A- 4 535 014
- US-A1- 2005 066 462
- US-B1- 6 792 739

## Description

### CROSS-REFERENCE TO RELATED PATENT APPLICATIONS

The present application claims the benefit of United States Provisional Patent Application Serial No. 61/662,092, filed June 20, 2012.

### BACKGROUND OF THE INVENTION

Oral care implements having a head plate that is separate from the support body of the oral care implement are known. In such oral care implements, the head plate and the support body have the same color so as to make it difficult to distinguish between the head plate and the remainder of the oral care implement. Oral care implements having head plates are conventionally formed in this manner in order to minimize the visualization of the interface between the head plate and the support body to a user. Thus, a need exists for an improved oral care implement that enhances the interface between the head plate and the support body.

US2005/066462A1, on which the pre-characterizing portions of the independent claims are based, describes an oral care implement having a head including a head plate secured to a support body.

### BRIEF SUMMARY OF THE INVENTION

The present invention is directed to an oral care implement and a method of forming a head of an oral care implement. In one aspect, the oral care implement includes a handle and a head. The head includes a pre-formed cleaning element assembly and a support body. A multi-colored interface is formed between a portion of the support body and the cleaning element assembly when a head plate of the cleaning element assembly is secured to the support body.

In one embodiment, the invention can be a method of forming a head of an oral care implement, the method comprising: a) forming a head plate of a material of a first color; b) mounting a plurality of tooth cleaning elements to the head plate, thereby forming a cleaning element assembly; c) forming a support body of a material of a second color, the second color being different than said first color, the support body comprising a socket; d) forming a multi-colored interface between a perimeter of the head plate and a perimeter of the socket by positioning the head plate of the cleaning element assembly in the socket of the support body; and e) securing the head plate to the support body thereby forming the head of the oral care implement.

In another embodiment, the invention can be an oral care implement comprising: a handle; and a head comprising: a pre-formed cleaning element assembly having a head plate and a plurality of tooth cleaning elements mounted to the head plate, the head plate formed of a material having a first color; a support body having a socket, the support body formed of a material having a second color; a multi-colored interface formed between a perimeter of the socket and a perimeter of the head plate; and the head plate fused to the support body along at least a portion of the multi-colored interface.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of an oral care implement in accordance with an embodiment of the present invention;
Figure 2 is a side view of a head of the oral care implement of FIG. 1;
Figure 3 is a front view of the head of the oral care implement of FIG. 2;
Figure 4 is a front view of a cleaning element assembly of the oral care implement of FIG. 1;
Figure 5A is a front view of a head plate of the cleaning element assembly of FIG. 4;
Figure 5B is a rear perspective view of the head plate of FIG. 5A;
Figure 6 is a cross-sectional view taken along line VI-VI of FIG. 4;
Figure 7A is a perspective view of the cleaning element assembly of the oral care implement of FIG. 1;
Figure 7B is a perspective view of a support body of the oral care implement of FIG. 1; and
Figure 8 is a cross-sectional view taken alone line VIII-VIII of FIG. 3.

### DETAILED DESCRIPTION OF THE INVENTION

The following description of the preferred embodiment(s) is merely exemplary in nature and is in no way intended to limit the invention, its application, or uses.

The description of illustrative embodiments according to principles of the present invention is intended to be read in connection with the accompanying drawings, which are to be considered part of the entire written description. In the description of the exemplary embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "left," "right," "top," "bottom," "front" and "rear" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," "secured" and similar refer to a relationship wherein structures are secured or attached to one another either directly or indirectly through intervening structures, as well as both movable or rigid attachments or relationships, unless expressly described otherwise. Moreover, the features and benefits of the invention are described by reference to the exemplary embodiments illustrated herein. Accordingly, the invention expressly should not be limited to such exemplary embodiments, even if indicated as being preferred. The discussion herein describes and illustrates some possible non-limiting combinations of features that may exist alone or in other combinations of features. The scope of the invention is defined by the claims appended thereto.

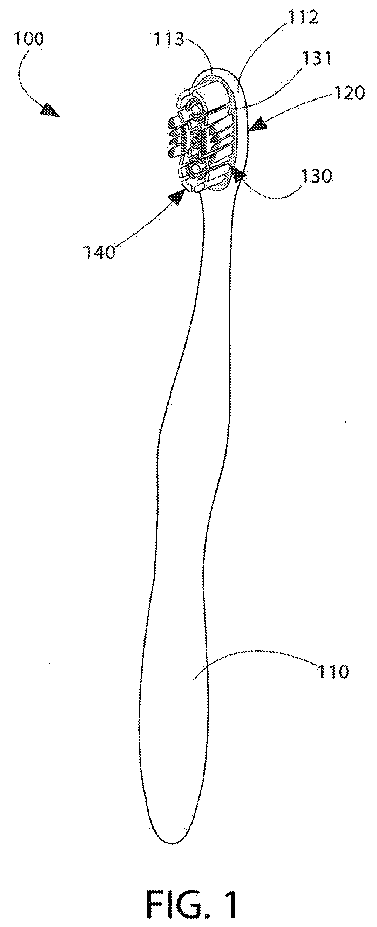

Referring to Figure 1, an oral care implement 100 in accordance with an embodiment of the present invention will be described. In the exemplified embodiment, the oral care implement 100 is in the form of a manual toothbrush. However, in certain other embodiments the oral care implement 100 can take on other forms such as being a powered toothbrush, a tongue scraper, a gum and soft tissue cleanser, a water pick, an interdental device, a tooth polisher, a specially designed ansate implement having tooth engaging elements or any other type of implement that is commonly used for oral care. Thus, it is to be understood that the inventive concepts discussed herein can be applied to any type of oral care implement unless a specific type of oral care implement is specified in the claims.

The oral care implement 100 generally includes a handle 110 and a head 120. The handle 110 is an elongated structure that provides the mechanism by which the user can hold and manipulate the oral care implement 100 during use. In the exemplified embodiment, the handle 110 is generically depicted having various contours for user comfort. However, the handle 110 can take on a wide variety of shapes, contours and configurations, none of which are limiting of the present invention. In the exemplified embodiment, the handle 110 is formed of a rigid plastic material, such as for example without limitation polymers and copolymers of ethylene, propylene, butadiene, vinyl compounds and polyesters such as polyethylene terephthalate. Of course, the invention is not to be so limited in all embodiments and the handle 110 may be formed with a resilient material, such as a thermoplastic elastomer, over portions of or the entirety of the handle 110 to enhance the gripability of the handle 110 during use. For example, the handle 110 may include a resilient material in the thumb grip region to increase the comfort to a user when using the oral care implement. Furthermore, portions of the handle 110 that are typically gripped by a user's palm during use may be overmolded with a thermoplastic elastomer or other resilient material to further increase comfort to a user.

The head 120 of the oral care implement 100 is coupled to the handle 110. Furthermore, the head 120 of the oral care implement 100 comprises a pre-formed cleaning element assembly 130 and a support body 112. Thus, the combination of the cleaning element assembly 130 and the support body 112 forms the head 120 of the oral care implement 100. In the exemplified embodiment, the support body 112 is formed integrally with the handle 110 as a single unitary structure using a molding, milling, machining or other suitable process. However, in other embodiments the handle 110 and the support body 112 may be formed as separate components which are operably connected at a later stage of the manufacturing process by any suitable technique known in the art, including without limitation thermal or ultrasonic welding, a tight-fit assembly, a coupling sleeve, threaded engagement, adhesion, or fasteners. Whether the support body 112 and the handle 110 are of a unitary or multi-piece construction (including connection techniques) is not limiting of the present invention, unless specifically claimed. In some embodiments of the invention, the support body 112 may be detachable (and replaceable) from the handle 110 using techniques known in the art.

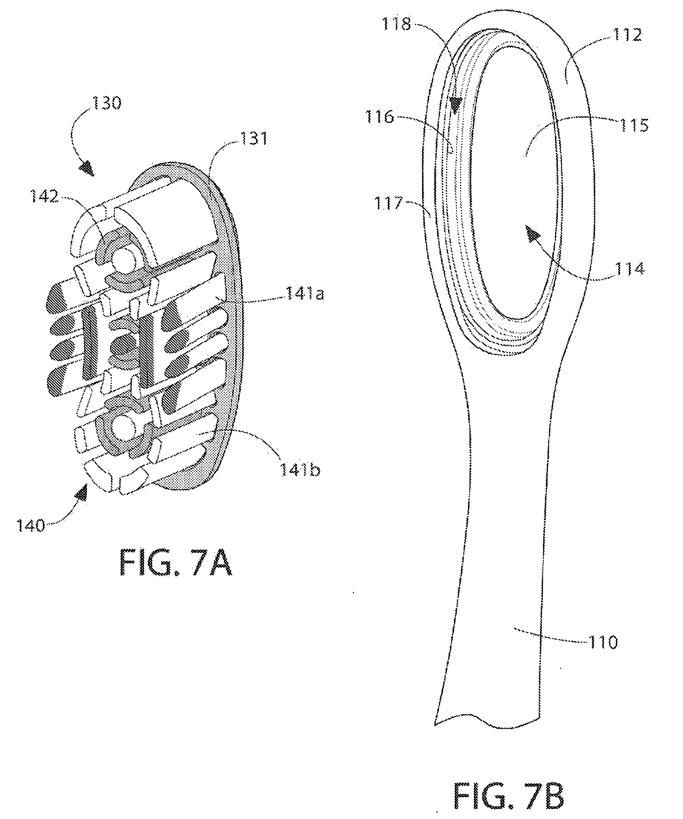

Due to its preferable integral formation with the handle 110, the support body 112 is formed of a rigid plastic material, such as any one of the materials discussed above with regard to the handle 110. As will be discussed in more detail below with reference to FIGS. 7-8, the cleaning element assembly 130 is secured to the support body 112 to form the head 120 of the oral care implement 100.

The handle 110 and the support body 112 are formed separately from the cleaning element assembly 130 by an injection molding technique. Thus, in certain embodiments, to form the handle 110 and the support body 112, a first mold having a first mold cavity is filled with a molten plastic material. The molten plastic material is cooled and allowed to harden. Upon hardening, the handle 110 and the support body 112 are formed and are removed from the first mold cavity of the first mold (see FIG. 7B for illustration of a portion of the handle 110 and the support body 112).

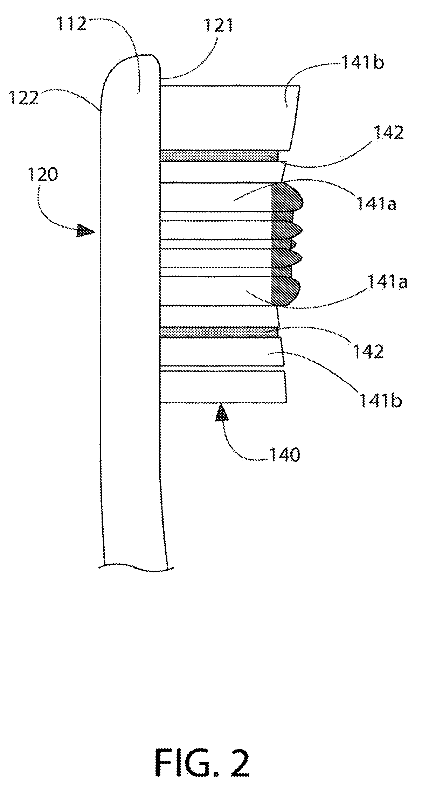

Referring now to FIGS. 1-4 concurrently, the head 120 of the oral care implement 100 will be described in more detail. The cleaning element assembly 130 of the head 120 generally includes a head plate 131 and a plurality of tooth cleaning elements 140 mounted to the head plate 131. The head plate 131 is a separate and distinct component from the support body 112. However, as will be discussed in more detail below, the head plate 131 is connected to the support body 112 at a later stage of the manufacturing process by any suitable technique known in the art, including without limitation thermal or ultrasonic welding, any fusion techniques such as thermal fusion, melting, a tight-fit assembly, a coupling sleeve, threaded engagement, adhesion, or fasteners. Thus, the head plate 131 and the support body 112 are separately formed components that are secured together during manufacture of the oral care implement 100 to form the head 120 of the oral care implement 100. Furthermore, a multi-colored interface 113 is formed at the boundary between the support body 112 and the head plate 131 as will be discussed below.

The head 120 has a front surface 121 and an opposing rear surface 122. In the exemplified embodiment, the head plate 131 forms a portion of the front, surface 121 of the head 120. Furthermore, the plurality of tooth cleaning elements 140 that are mounted to the head plate 131 extend from the front surface 121 of the head 120. In the exemplified embodiment, the rear surface 122 of the head 120 is a flat, smooth surface. However, in certain embodiments a soft tissue cleaner having a plurality of nubs extending outwardly wherefrom can be coupled to the rear surface 122 of the head 120. An example of a suitable elastomeric soft tissue cleaner that may be used with the present invention and positioned on the rear surface 121 of the head 120 is disclosed in U.S. Patent No. 7,143,462, issued December 5. Of course, other soft tissue cleaners may also be used. In certain other embodiments, the nubs of the soft tissue cleaner can take the form of elongated ridges, nubs, or combinations thereof.

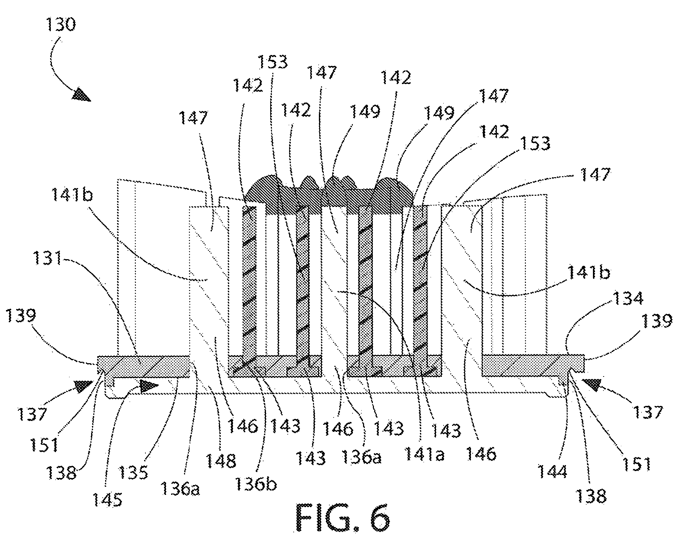

The head plate 131 extends along a longitudinal axis A-A from a top end 132 to a bottom end 133. The plurality of tooth cleaning elements 140 that are mounted to the head plate 131 includes bristle tufts 141a, 141b and elastomeric elements 142. The methods by which the bristle tufts 141a, 141b and the elastomeric elements 142 are mounted on and connected to the head plate 131 will be discussed in greater detail below with reference to FIG. 6. Furthermore, the bristle tufts 141a, 141b include tapered bristle tufts 141a and non-tapered bristle tufts 141 b.

In the exemplified embodiment, the tapered bristle tufts 141a are positioned along opposing sides of the head plate 131 in a generally central region of the head plate 131 located in between the top and bottom ends 132, 133 of the head plate 131. Specifically, in the exemplified embodiment there are four tapered bristle tufts on each of the opposing sides of the head plate 131 arranged in a symmetrical fashion. Each of the sets of four tapered bristle tufts includes two cylindrical tapered bristle tufts and two non-cylindrical tapered bristle tufts. The two cylindrical tapered bristle tufts are located interiorly relative to the two non-cylindrical tapered bristle tufts. Furthermore, there is a tapered bristle wall located inwardly of the four tapered bristle tufts on the head plate 131. The head plate 131 and the bristle configuration are symmetrical about the longitudinal axis A-A.

The tapered bristle tufts 141a have a height extending from the head plate 131 to the distal ends of the bristle tufts 141a that is greater than the height of the non-tapered bristle tufts 141b so that the tapered bristle tufts 141a are the first to touch a user's teeth and gum line during brushing. This enables the tapered bristle tufts 141 a to reach in between the teeth and gums for a more effective cleaning during tooth brushing. Only a select few of the tapered and non-tapered bristle tufts 141a, 141b and elastomeric elements 142 are labeled in the figures for clarity.

The bristle tufts 141a, 141b can be, without limitation, filament bristles, fiber bristles, nylon bristles, spiral bristles, tapered bristles, round-end bristles, combinations thereof and/or structures containing such materials or combinations. Furthermore, the elastomeric members 142 are formed of a rubber material or any other resilient material, such as a thermoplastic elastomer or other suitable material used in oral care products.

Still referring to FIGS. 1-4 concurrently, various components of the cleaning element assembly 130 are depicted with different shades of grayscale. The different shades of grayscale, which will be described in detail below, are merely intended to show differences in color between the various components. As will be described below, in certain instances two components that are illustrated with different shades of grayscale can be either the same color or a different color. However, these instances will be understood based on the description below.

Furthermore, although certain ones of the components are illustrated in grayscale and other components are illustrated as being white (such as the support body 112), in certain embodiments one or more of the components that are illustrated in grayscale can be white and the support body 112 may take on a color other than white. Each component that has grayscale shading will be described as having a color. As used herein, the term "color" is intended to include both achromatic colors such as white, black and gray and chromatic colors such as blue, green, red and the like. In other words, the invention is not to be particularly limited to any specific colors unless so specified. Thus, the invention is not directed to any specific colors for the various components, but rather creating a multi-colored interface between the head plate 131 and the support body 112 and for correlating the colors of other components of the oral care implement 100 to create a desired effect and to facilitate bristle splay detection. In certain embodiments, a difference in color is merely a contrast in color.

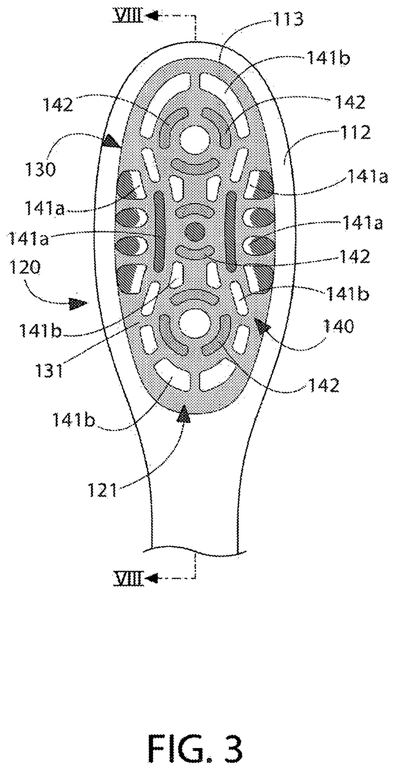

The head plate 131 is formed of a material having a first color. As noted above, the first color and any other colors described herein can be any color in the color spectrum and includes achromatic colors. The support body 112 is formed of a material having a second color. In the exemplified embodiment, the support body 112 is not illustrated in grayscale and simply appears white. However, as has been discussed herein above, the support body 112 is not limited to being white and can be any other color. However, in accordance with the present invention, the first color is different than the second color. As a result of the difference in color between the head plate 131 and the support body 112, when the head plate 131 of the cleaning element assembly 130 is connected to the support body 112, a multi-colored interface 113 is formed between the head plate 131 and the support body 112 (best seen in FIG. 3).

In the exemplified embodiment, the multi-colored interface 113 is formed by two different colors; namely the first color of the head plate 131 and the second color of the support body 112. Thus, in the exemplified embodiment the multi-colored interface 113 is actually a dual-colored interface. However, the invention is not to be so limited in all embodiments and in certain other embodiments the multi-colored interface 113 may include more than two different colors. For example without limitation, in certain embodiments the head plate 131 can be formed of two or more different colors and the support body 112 can be formed of one or more different colors such that none of the colors of the head pilate 131 are the same as the colors of the support body 112. In such embodiments, the multi-colored interface 113 will include more than two colors (i.e., at least two different colors of the head plate 131 and at least one other different color of the support body 112), but the multi-colored interface 113 will still be clearly visible due to different colors being used for each of the head plate 131 and the support body 112.

Further still, in some embodiments the head plate 131 and the support body 112 can each include more than one color. Furthermore, some or all of the colors of the head plate 131 can be the same as some or all of the colors of the support body 112. However, in such an embodiment, a color of the head plate 131 will not be aligned with the same color on the support body 112. Thus, for example without limitation, if each of the support body 112 and the head plate 131 is formed of red, blue, green and yellow, the matching colors (i.e., red-red; blue-blue; green-green; yellow-yellow) will not be aligned so that the entire boundary between the head plate 131 and the support body 112 forms the multi-colored interface 113 (i.e., matching colors are not aligned at the interface thereby forming the multi-colored interface 113).

The multi-colored interface 113 results in improvements in the fusion of the head plate 131 to the support plate 112 and in the inspection thereof. Specifically, by utilizing a different color for the head plate 131 than for the support plate 112 thereby creating the multi-colored interface 113, proper placement of the head plate 131 during attachment of the head plate 131 to the support body 112 is more easily achieved. Furthermore, during fusion of the head plate 131 to the support body 112, if both of the head plate 131 and the support body 112 are the same color the interface therebetween can be difficult to visually detect. Specifically, the head plate 131 and support body 112 can be fused to the point where there is no line or other distinguishing feature between the two components. By creating the multi-colored interface, a user will always be able to visually detect where the interface is located to enhance the ability to inspect the fusion between the head plate 131 and the support body 112. Thus, the multi-colored interface facilitates the creation of a more robust oral care implement having a head plate that is secured to a support body.

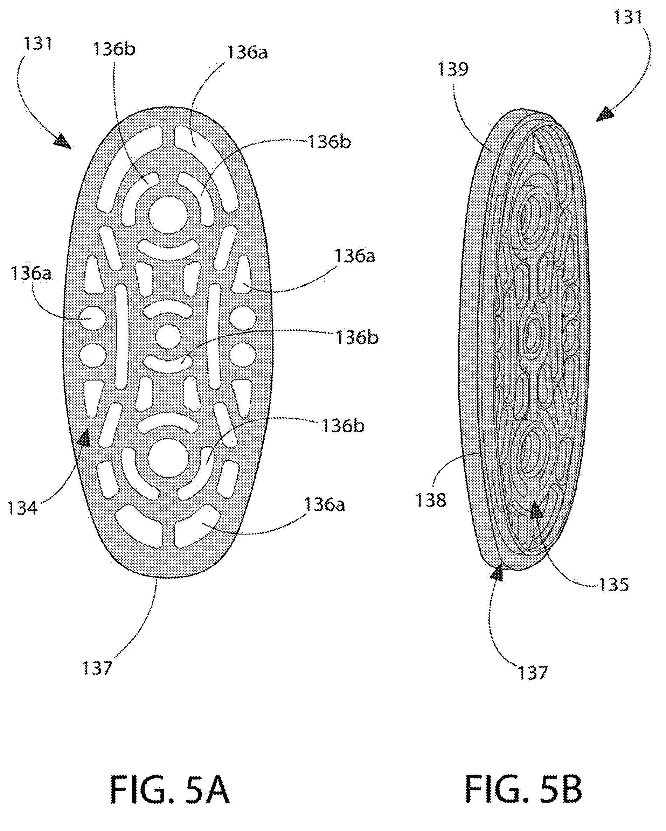

Referring now to FIGS. 5A and 5B, the head plate 131 is illustrated with the plurality of cleaning elements 140 removed. Thus, FIGS. 5A and 5B illustrate the head plate 131 after formation thereof, but before any tooth cleaning elements or other materials are added and/or connected to the head plate 131. The head plate 131 is formed by an injection molding technique. More specifically, to form the head plate 131 a second mold having a second mold cavity is filled with a molten plastic material. The molten plastic material is then cooled and allowed to harden. Upon hardening, the head plate 131 is formed and is removed from the second mold cavity of the second mold. Thus, although they can be formed of the same material, the head plate 131 is a completely separate structure from the handle/support body 112.

Thus, the head plate 131 is formed of a rigid material, such as one of the hard plastic materials listed above as forming the handle 110. Although described herein as being a rigid material, the head plate 131 may have a degree of flexibility in certain embodiments due to its reduced thickness relative to the thickness of the handle 110. In certain embodiments, the head plate 131 has a hardness of 80 MPa as measured by the International Organization for Standardization method for determination of hardness for plastics ISO 2039-1:2001.

The head plate 131 comprises a front surface 134 and an opposing rear surface 135. Furthermore, the head plate 131 comprises a plurality of holes 136 formed therein for insertion of the tooth cleaning elements 140 during creation of the cleaning element assembly 130 from the head plate 131. More specifically, the holes 136 include first holes 136a for insertion of the bristle tufts 141a, 141b and second holes 136b for insertion of the elastomeric elements 142. Only some of the holes 136a, 136b are labeled in the drawings to avoid clutter and for clarity. The head plate 131 also includes a perimeter 137 that forms a part of the multi-color interface 113 as discussed in more detail below. During manufacture of the oral care implement 100, the head plate 131 is first formed of the first color, and then the plurality of tooth cleaning elements 140 are mounted to the head plate 131 thereby forming the cleaning element assembly 130.

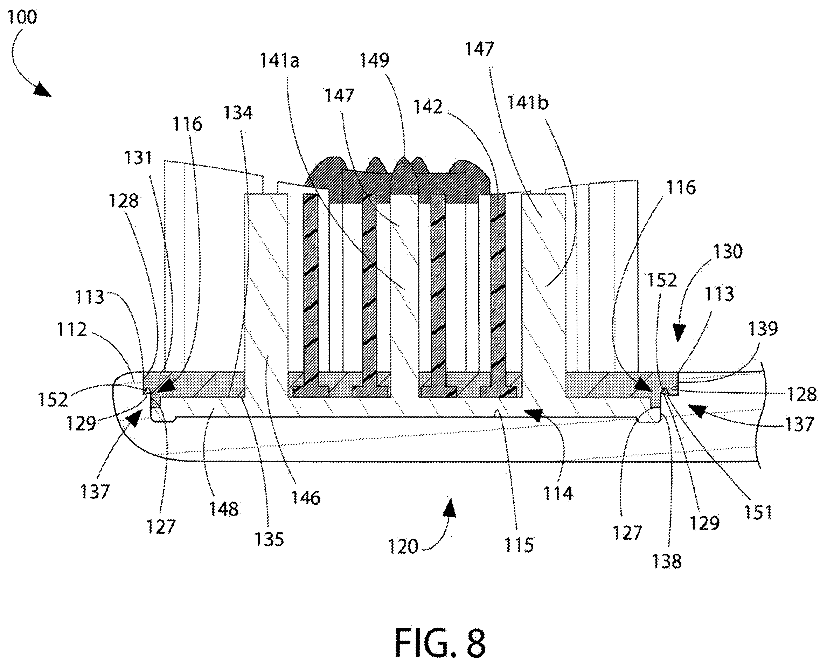

Referring to FIG. 5B and 6 concurrently, the head plate 131 will be described with regard to the mounting of the tooth cleaning elements 140 to the head plate 131 to form the cleaning element assembly 130. The perimeter 137 of the head plate 131 is formed by an inwardly stepped surface including a first riser surface 138, a second riser surface 139 and a grooved ledge surface 151 in between the first and second riser surfaces 138, 139. This, the perimeter 137 of the head plate 131 is specifically not limited to being only the second riser surface 139, which is the outermost portion of the head plate 131, but also includes the first riser surface 138 and the grooved ledge surface 151. The grooved ledge surface 151 is a generally curved, concave surface that transitions the perimeter 137 of the head plate 131 from the first riser surface 138 to the second riser surface 139. The first and second riser surfaces 138, 139 and the grooved ledge surface 151 facilitate securing or fusing the head plate 131 to the support body 112 as discussed below with reference to FIG. 8.

As noted above, the pluralité of tooth cleaning elements 140 includes tapered bristle tufts 141a, non-tapered bristle tufts 141b and elastomeric elements 142. In certain preferred embodiments, the elastomeric elements 142 are connected to the head plate 131 before the bristle tufts 141a, 141b. The elastomeric elements 142 are connected to the head plate 131 by positioning the pre-formed head plate 131 (formed as discussed above) in a third mold cavity of a third mold and injecting molten resilient material onto the head plate 131 while the head plate 131 is positioned within the third mold cavity of the third mold. The third mold is pre-formed to the desired elastomeric element shape and size such that the molten resilient material will fill in the third mold cavity. More specifically, as the molten resilient material flows into the third mold cavity, the molten resilient material flows into and through the second holes 136b formed into the head plate 131. As the molten resilient material cools down and dries, the molten resilient material hardens and forms the elastomeric elements 142 on the head plate 131 that extend upwardly from the front surface 134 of the head plate 131.

In certain embodiments, the elastomeric elements 142 have a base portion 143 that is substantially flush with the rear surface 135 of the head plate 131 and a body portion 153 protruding from the front surface 134 of the heat plate 131. The base portion 143 of the elastomeric elements 142 is the portion of the elastomeric elements 142 that is located within the second holes 136b in the head plate 131. In the exemplified embodiment, the base portions 143 of the elastomeric elements 142 are thicker than the body portions 153 of the elastomeric elements 142 in order to achieve a secure attachment of the elastomeric elements 142 to the head plate 131. However, the invention is not to be so limited in all embodiments and in certain other embodiments the elastomeric elements 142 can have a constant cross-sectional area throughout their length.

After attachment of the elastomeric elements 142 to the head plate 131, the tapered and non-tapered bristle tufts 141a, 141b of the tooth cleaning elements are mounted to the head plate 131. Although formation of the cleaning element assembly 130 is described herein such that the elastomeric elements 142 are attached to the head plate 131 prior to attachment of the bristle tufts 141a, 141b to the head plate 131, the invention is not to be so limited in all embodiments and in certain other embodiments the bristle tufts 141a, 141b can be attached to the head plate 131 prior to attachment of the elastomeric elements 142 to the head plate 131. The rear surface 135 of the head plate 131 is defined by an upstanding peripheral wall 144. The upstanding peripheral wall 144 substantially surrounds the rear surface 135 of the head plate 131, thereby creating a basin 145 within which the bristle tufts 141a, 141b can be melted to the rear surface 135 of the head plate 131.

The bristle tufts 141a, 141b are mounted to the head plate 131 as follows. To begin, first portions 146 of the bristle tufts 141a, 141b are inserted through the first holes 136a in the head plate 131 while second portions 147 of the bristle tufts 141a, 141b protrude from the front surface 134 of the head plate 131. Specifically, the first portions 146 of the bristle tufts 141a, 141b are inserted through the first holes 136a in the head plate 131 until a part of the first portions 146 of the bristle tufts 141a, 141b protrude through the first holes 136a and from the rear surface 135 of the head plate 131. After inserting the first portions 146 of the bristle tufts 141a, 141b through the first holes 136a in the head plate 131, a heated plate or iron is placed into contact with or adjacent to the first portions 146 of the bristle tufts 141a, 141b to melt the first portions 146 of the bristle tufts 141a, 141b.

Melting the first portions 146 of the bristle tufts 141a, 141b causes the first portions 146 of the bristle tufts 141a, 141b to fuse together to form a matte 148 adjacent to the rear surface 135 of the head plate 131. Thus, the matte 148 may be considered a bristle melt, such that the matte 148 is formed by melting the first portions 146 of the bristle tufts 141a, 141b and then enabling the melted first portions 146 of the bristle tufts 141a, 141b to cool and solidify. The matte 148 is essentially a thin layer of the bristle material that fills in the basin 145 on the rear surface 135 of the head plate 131. In the exemplified embodiment, the matte 148 extends beyond the upstanding peripheral wall 144 of the head plate 131. However, the invention is not to be so limited in all embodiments and in certain other embodiments the matte 148 is flush with the upstanding peripheral wall 144 at its furthermost point of extension from the rear surface 135 of the head plate 131. Furthermore, in the exemplified embodiment the matte 148 covers the entire rear surface 135 of the head plate 131, including covering the base portions 143 of the elastomeric elements 142 which are flush with the rear surface 135 of the head plate 131.

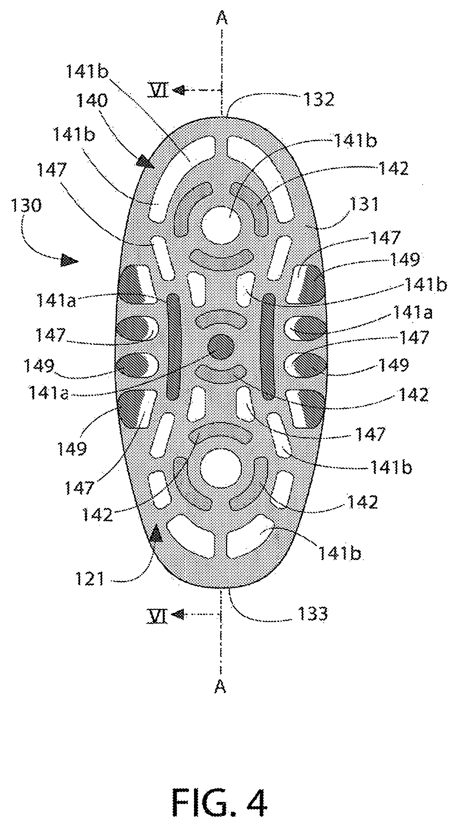

After forming the elastomeric elements 142 on the head plate 131 and mounting the bristles 141a, 142b to the head plate 131, the head plate 131 becomes the cleaning element assembly 130 illustrated in FIG. 4. The cleaning element assembly 130 is then secured to the support body 112 as discussed below with preference to FIGS. 7-8.

Referring to FIGS. 3, 4 and 6 concurrently, the various color dichotomies of the components of the cleaning element assembly 130 and the support body 112 relative to one another will be described. As noted above, the bristle tufts 141a, 141b have first portions 146 that extend through the holes 136 in the head plate 131 and form the matte 148. The bristle tufts 141a, 141b also have second portions 147 that protrude from the front surface 134 of the head plate 131. Furthermore, the tapered bristle tufts 141 a also include third portions 149 forming distal ends of the tapered bristle tufts 141a. In the exemplified embodiment, the tapered bristle tufts 141 a begin to taper inwardly at the third portions 149. However, the invention is not to be so limited and the length of the third portions 149 of the tapered bristle tufts 141a relative to the entire length of the tapered bristle tufts 141a is not to be particularly limiting of the present invention in all embodiments. Thus, in certain embodiments the tapered bristle tufts 141a may begin to taper along the second portions 147 of the tapered bristle tufts 141a, and in still other embodiments the third portions 149 of the tapered bristle tufts 141a may be non-tapered for a first distance, and then tapered to the distal tip of the tapered bristle tufts 141a.

In the exemplified embodiment, the second portions 147 of the bristle tufts 141a, 141b are formed of a material having a third color and the third color is different than the first color of the head plate 131. Furthermore, the third portions 149 of the tapered bristle tufts 141a are formed of a material having a fourth color such that the fourth color is different than the third color of the second portions 147 of the bristle tufts 141a. Thus, the third portions 149 of the tapered bristle tufts 141a are highlighted by forming the third portions 149 of the tapered bristle tufts 141a from a different colored material than the second portions 147 of the tapered bristle tufts 141a and the non-tapered bristle tufts 141b. Moreover, in certain embodiments the fourth color of the third portions 149 of the tapered bristle tufts 141a is the same color as the first color of the head plate 131. Furthermore, in certain embodiments the third color of the second portions 147 of the bristle tufts 141a, 141b can be the same as or similar to the second color of the support body 112.

Thus, as a result of all of the differences in color, the second portions 147 of the bristle tufts 141a, 141b that extend from the front surface 134 of the head plate 131 are formed of a different color than the head plate 131 itself, and the distal ends (i.e., third portions 149) of the tapered bristle tufts 141a are formed of a different color than the second portions 147 of the tapered bristle tufts 141a. In certain embodiments, the color of the third portions 149 of the tapered bristle tufts 141a is the same as the color of the head plate 131, although the invention is not to be so limited in all embodiments.

By forming the second portions 147 of the bristle tufts 141a, 141b of a different color than the head plate 131, a user can more easily detect splaying of the bristles so that the user can replace the oral care implement 100 when the bristles have significantly splayed. Furthermore, by forming the third portions 149 of the bristle tufts 141a of a different color than the second portions 147 of the bristle tufts 141a, 141b, splay detection at the tips of the bristle tufts 141a is even more pronounced. Further still, by forming the third portions 149 of the bristle tufts 141 a of a different color than the support body 112, a user can view the oral care implement from the front and easily visualize the amount of bristle tuft splaying that has occurred. Altering the color of the third portions 149 of only the tapered bristle tufts 141a provides a sufficient grouping of bristle tufts to adequately detect splay.

Furthermore, the elastomeric elements 142 are formed of a material of a fifth color, and the fifth color of the elastomeric elements 142 is also different than the first color of the head plate 131. In one preferred embodiment, the fifth color of the elastomeric elements 142 is different than each of the other colors discussed herein. However, the invention is not to be so limited in all embodiments and in certain other embodiments the color of the elastomeric elements 142 may be the same as either the color of the second portions 147 of the bristle tufts 141a, 141b or the color of the third portions 149 of the tapered bristle tufts 141a.

Referring now to FIGS. 7A and 7B concurrently, the cleaning element assembly 130 with the tooth cleaning elements 140 mounted therein is illustrated separated from the support body 112. As noted above, in the exemplified embodiment the support body 112 is formed integrally with the handle 110 of the oral care implement 100. The support body 112 has a socket 114 having a floor 115. The socket 114 is defined by a perimeter 116. More specifically, the support body 112 comprises a peripheral wall 117 that is upstanding from the floor 115 of the socket 114 and forms the peripheral boundary of the socket 114. The perimeter 116 of the socket 114 is formed by an inner surface 118 of the peripheral wall 117.

After the plurality of tooth cleaning elements 140 are mounted onto the head plate 131 so that the head plate 131 becomes the cleaning element assembly 130, the head plate 131 is positioned within the socket 114 of the support body 112 and the secured to the support body 112. Upon securing the head plate 131 to the support body 112, the head 120 of the oral care implement 100 is formed. As noted above, the head plate 131 is secured to the support body 112, such as by fusing the head plate 131 to the support body 112 via sonic welding, thermal fusion techniques or melting, or through the use of adhesives, a snap-fit, an interference fit or the like. Fusing the head plate 131 to the support body 112 creates the multi-colored interface 113 between the perimeter 116 of the socket 114 and the perimeter 137 of the head plate 131 (see FIG. 3).

Referring now to FIG. 8, the coupling of the head plate 131 to the support body 112 will be described in more detail. However, prior to discussing the aforesaid coupling, the structure of the support body 112 will be discussed. As noted above, the support body 112 includes a perimeter 116 that defines the socket 114 within which the head plate 131 is positioned to form the head 120 of the oral care implement 100. The perimeter 116 of the socket 114 is formed by an outwardly stepped surface including a first riser surface 127, a second riser surface 128, and an inclined ledge surface 129. The inclined ledge surface 129 is inclined so as to form an angle of between approximately 70°-85° relative to the second riser surface 128 of the perimeter 116 of the socket 114.

When the head plate 131 is positioned within the socket 114, the inwardly stepped surface of the perimeter 137 of the head plate 131 mates with the outwardly stepped surface of the perimeter 116 of the support body 112. The multi-colored interface 113 is formed by the mating of the inwardly stepped surface of the perimeter 137 of the head plate 131 with the outwardly stepped surface of the perimeter 116 of the support body 112. Thus, the multi-colored interface 113 is not only the interface between the second riser surface 128 of the perimeter 116 of the socket 114 and the second riser surface 139 of the perimeter 137 of the head plate 131. Rather the multi-colored interface 113 includes the entirety of the interface of the mating stepped surfaces of the perimeter 116 of the support body 112 and the perimeter 137 of the head plate 131.

Furthermore, when the head plate 131 is positioned within the socket 114, the grooved ledge surface 151 of the perimeter 137 of the head plate 131 is positioned adjacent the inclined ledge surface 129 of the perimeter 116 of the support body 112. Due to the curved concave shape of the grooved ledge surface 151 and the inclined nature of the inclined ledge surface 129, the entirety of the grooved ledge surface 151 does not mate with the entirety of the inclined ledge surface 129. Rather, a gap 152 is present between the grooved ledge surface 151 and the inclined ledge surface 129 when the head plate 131 is positioned within the socket 114 of the support body 112.

After positioning the head plate 131 into the socket 114 of the support body 112, the head plate 131 is secured to the support body 112 using one of the techniques that have been discussed herein above. Specifically, the head plate 131 is secured to the support body 112 by fusing the head plate 131 to the support body 112 along at least a portion of the multi-colored interface. Thus, the multi-colored interface is formed by the following mating interactions: (1) the first riser surface 138 of the perimeter 137 of the head plate 131 mates with the first riser surface 127 of the perimeter 116 of the support body 112; (2) the second riser surface 139 of the perimeter 137 of the head plate 131 mates with the second riser surface 128 of the perimeter 116 of the support body 112; and (3) the grooved ledge surface 151 of the perimeter 137 of the head plate 131 mates with the inclined ledge surface 129 of the perimeter 116 of the support body 112. Each of the mating interactions described above are created by fusing the components together such as by ultrasonic welding, melting or any other techniques that have been described in detail herein.

As used throughout, ranges are used as shorthand for describing each and every value that is within the range. Any value within the range can be selected as the terminus of the range. In the event of a conflict in a definition in the present disclosure and that of a cited reference, the present disclosure controls.

While the foregoing description and drawings represent the exemplary embodiments of the present invention, it will be understood that various additions, modifications and substitutions may be made therein without departing from the scope of the present invention as defined in the accompanying claims. In particular, it will be clear to those skilled in the art that the present invention may be embodied in other specific forms, structures, arrangements, proportions, sizes, and with other elements, materials, and components, without departing from the spirit or essential characteristics thereof. One skilled in the art will appreciate that the invention may be used with many modification of structure, arrangement, proportions, sizes, materials, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A method of forming a head of an oral care implement (100), the method comprising:
a) forming a head plate (131) of a material of a first color;
b) mounting a plurality of tooth cleaning elements (140) to the head plate, thereby forming a cleaning element assembly (130);
c) forming a support body (112), the support body (112) comprising a socket (114);
d) forming an interface (113) between a perimeter of the head plate (131) and a perimeter of the socket (114) by positioning the head plate (131) of the cleaning element assembly (130) in the socket (114) of the support body (112); and
e) securing the head plate (131) to the support body (112) thereby forming the head (120) of the oral care implement;
**characterized in that** the support body (112) is of a material of a second color, the second color being different than the first color, and **in that** the interface (113) is a multi-colored interface.

2. The method according to claim 1 wherein step e) further comprises fusing the head plate (131) to the support body (112) along at least a portion of the multi-colored interface (113), optionally wherein step e) further comprises sonically welding the head plate (131) to the support body (112).

3. The method according to claim 1 or 2 wherein the plurality of tooth cleaning elements (140) comprise bristle tufts (141a,141b), and wherein step b) further comprises:
b-1) inserting first portions (146) of the bristle tufts (141a,141b) through holes in the head plate (131), second portions (147) of the bristle tufts protruding from a front surface of the head plate; and
b-2) fusing the first portions (146) of the bristle tufts together to form a matte (148) adjacent a rear surface of the head plate (131),
optionally wherein step d) further comprises positioning the head plate (131) of the cleaning element assembly (130) in the socket (114) of the support body (112) so that the matte is located between the head plate (131) and the support body (112).

4. The method according to claim 3 wherein the second portions of the bristle tufts (141a,141b) are formed of a material having a third color, the third color being different than the first color, optionally wherein at least one of the bristle tufts (141a,141b) comprises a third portion (149) forming a distal end of the at least one bristle tuft (141 a), the third portion being a fourth color, the fourth color is different than the third color, optionally wherein the fourth is the same as the first color.

5. The method according to any one of claims 1 to 4 wherein the plurality of tooth cleaning elements (140) comprise elastomeric elements (142), and wherein step b) further comprises injection molding the elastomeric elements onto the head plate (131), optionally wherein the elastomeric elements (142) are formed of a material of a fifth color, the fifth color being different than the first color.

6. The method according to any one of claims 1 to 5 wherein the perimeter of the head plate (131) is formed by an inwardly stepped surface and the perimeter of the socket (114) is formed by an outwardly stepped surface, and wherein step d) further comprises forming the multi-colored interface (113) by mating the inwardly stepped surface and the outwardly stepped surface.

7. The method according to claim 6 wherein the outwardly stepped surface comprises an inclined ledge (126) surface and the inwardly stepped surface comprises a grooved ledge surface (151), and wherein step d) further comprises positioning the grooved ledge surface adjacent the inclined ledge surface.

8. An oral care implement (100) comprising:
a handle (110); and
a head (120) comprising:
a pre-formed cleaning element assembly (130) having a head plate (131) and a plurality of tooth cleaning elements (140) mounted to the head plate, the head plate formed of a material having a first color;
a support body (112) having a socket (114);
an interface (113) formed between a perimeter of the socket (114) and a perimeter of the head plate (151); and
the head plate (131) fused to the support body (112) along at least a portion of the interface;
**characterized in that** the support body (112) is formed of a material having a second color, and **in that** the interface (113) is a multi-colored interface.

9. The oral care implement (100) according to claim 8 wherein the head plate (131) is sonically welded to the support body (112) along at least a portion of the multi-colored interface (113).

10. The oral care implement (100) according to any one of claims 8 to 9 wherein the plurality of tooth cleaning elements (140) comprise bristle tufts (141a, 141b) having first portions (146) that are inserted through holes in the head plate (131) and fused together to form a matte (148) adjacent a rear surface of the head plate and second portions (147) protruding from a front surface of the head plate, optionally wherein the matte (148) is located between the head plate (131) and a floor of the socket (114).

11. The oral care implement (100) according to claim 10 wherein the second portions (147) of the bristle tufts are formed of a material having a third color, the third color being different than the first color.

12. The oral care implement (100) according to any one of claims 10 to 11 wherein the plurality of tooth cleaning elements (140) further comprise elastomeric elements (142), and wherein the matte (148) covers a base portion of the elastomeric elements, optionally wherein at least one of the bristle tufts (141a, 141b) comprises a third portion (149) forming a distal end of the at least one bristle tuft, the third portion being a fourth color, and wherein the fourth color is different than the third color, optionally wherein the fourth color is the same as the first color.

13. The oral care implement (100) according to any one of claims 8 to 12 wherein the plurality of tooth cleaning elements (140) comprise elastomeric elements (142) that are injection molded onto the head plate (131).

14. The oral care implement (100) according to claim 13 wherein the elastomeric elements (142) are formed of a material of a fifth color, the fifth color being different than the first color.

15. The oral care implement (100) according to any one of claims 8 to 14 wherein the perimeter of the head plate (131) comprises an inwardly stepped surface and the perimeter of the socket (114) comprises an outwardly stepped surface, and wherein the inwardly stepped surface of the perimeter of the head plate mates with the outwardly stepped surface of the perimeter of the socket when the multi-colored interface (113) is formed, optionally wherein the outwardly stepped surface comprises an inclined ledge surface (126) and the inwardly stepped surface comprises a grooved ledge surface (151), and wherein the grooved ledge surface is positioned adjacent the inclined ledge surface when the multi-colored interface is formed, optionally wherein a gap exists between the grooved ledge surface and the inclined ledge surface.

## Patentansprüche

1. Verfahren zum Herstellen eines Kopfes einer Mundpflegeeinheit (100), wobei das Verfahren umfasst:
a) Ausbilden einer Kopfplatte (131) aus einem Material einer ersten Farbe;
b) Anbringen einer Mehrzahl von Zahnreinigungselementen (140) an der Kopfplatte, damit eine Reinigungselementenanordnung (130) ausgebildet wird;
c) Ausbilden eines Stützkörpers (112), wobei der Stützkörper (112) einen Sockel (114) umfasst;
d) Ausbilden einer Verbindung (113) zwischen einer Umfassung der Kopfplatte (131) und einer Umfassung des Sockels (114) durch Positionieren der Kopfplatte (131) der Reinigungselementenanordnung (130) in dem Sockel (114) des Stützkörpers (112); und
e) Sichern der Kopfplatte (131) an dem Stützkörper (112), wodurch der Kopf der Mundpflegeeinheit ausgebildet wird;
**dadurch gekennzeichnet, dass** der Stützkörper (112) aus einem Material einer zweiten Farbe hergestellt ist, wobei die zweite Farbe sich von der ersten Farbe unterscheidet, und dass die Verbindung (113) eine mehrfarbige Verbindung ist.

2. Verfahren nach Anspruch 1, wobei Schritt e) weiter umfasst Verschmelzen der Kopfplatte (131) mit dem Stützkörper (112) entlang zumindest eines Abschnitts der mehrfarbigen Verbindung (113), wobei optional Schritt e) weiter umfasst
schalltechnisches Verschweißen der Kopfplatte (131) mit dem Stützkörper (112).

3. Verfahren nach Anspruch 1 oder 2, wobei die Mehrzahl der Zahnreinigungselemente (140) Bürstenbüschel (141a, 141b) umfasst, und wobei Schritt b) weiter umfasst:
b-1) Einsetzen von ersten Abschnitten (146) der Bürstenbüschel (141a, 141b) durch Löcher in der Kopfplatte (131), wobei zweite Abschnitte (147) der Bürstenbüschel von der Stirnfläche der Kopfplatte abstehen; und
b-2) Verschmelzen der ersten Abschnitte (146) der Bürstenbüschel miteinander, um nahe der Rückseite der Kopfplatte (131) eine Schmelze herzustellen, wobei optional Schritt d) weiter Positionieren der Kopfplatte (131) der Reinigungselementenanordnung (130) in dem Sockel (114) des Stützkörpers (112) umfasst, sodass die Schmelze zwischen der Kopfplatte (131) und dem Stützkörper (112) liegt.

4. Verfahren nach Anspruch 3, wobei die zweiten Abschnitte der Bürstenbüschel (141a, 141b) aus einem Material mit einer dritten Farbe ausgebildet werden, wobei die dritte Farbe sich von der erste Farbe unterscheidet, wobei optional zumindest einer der Bürstenbüschel (141a, 141b) einen dritten Abschnitt (149) umfasst, der ein distales Ende des zumindest einen Bürstenbüschels (141a) ausbildet, wobei der dritte Abschnitt eine vierte Farbe hat, wobei die vierte Farbe sich von der dritten Farbe unterscheidet, wobei optional die vierte Farbe dieselbe ist wie die erste Farbe.

5. Verfahren nach einem der Ansprüche 1 bis 4, wobei die Mehrzahl der Zahnreinigungselemente (140) elastomere Elemente (142) umfasst, und wobei Schritt b) weiter umfasst
Spritzgießen der elastomeren Elemente auf die Kopfplatte (131), wobei optional die elastomeren Elemente (142) aus einem Material aus einer fünften Farbe gebildet werden, wobei die fünfte Farbe sich von der ersten Farbe unterscheidet.

6. Verfahren nach einem der Ansprüche 1 bis 5, wobei die Umfassung der Kopfplatte (131) durch eine einwärts abgesetzte Fläche gebildet wird und die Umfassung der Sockel (114) durch eine auswärts abgesetzte Fläche gebildet wird, und wobei Schritt d) weiter das Ausbilden der mehrfarbigen Verbindung (113) durch Paaren der einwärts abgesetzten Fläche und der auswärts abgesetzten Fläche umfasst.

7. Verfahren nach Anspruch 6, wobei die auswärts abgesetzte Fläche eine geneigte Absatzfläche (126) umfasst und die einwärts abgesetzte Fläche eine gerillte Absatzfläche (151) umfasst, und wobei Schritt d) weiter Positionieren der gerillten Absatzfläche nahe der schräge Absatzfläche umfasst.

8. Mundpflegeeinheit (100) umfassend:
einen Griff (110); und
einen Kopf (120) umfassend:
eine vorgeformte Reinigungselementenanordnung (130) mit einer Kopfplatte (131) und einer Mehrzahl von Zahnreinigungselementen (140), die an die Kopfplatte angebracht sind, wobei die Kopfplatte aus einem Material einer ersten Farbe gebildet wird;
ein Stützkörper (112) mit einem Sockel (114);
eine Verbindung (113), die zwischen einer Umfassung des Sockels (114) und einer Umfassung der Kopfplatte (151) gebildet wird; und
eine Kopfplatte (131), die an den Stützkörper (112) entlang zumindest einem Abschnitt der Verbindung verschweißt wird;
**dadurch gekennzeichnet, dass** der Stützkörper (112) aus einem Material einer zweiten Farbe gebildet wird und dass die Verbindung (113) eine mehrfarbige Verbindung ist.

9. Mundpflegeeinheit (100) nach Anspruch 8, wobei die Kopfplatte (131) schalltechnisch entlang zumindest einem Abschnitt der mehrfarbigen Verbindung (113) an den Stützkörper (112) verschweißt wird.

10. Mundpflegeeinheit (100) nach einem der Ansprüche 8 bis 9, wobei die Mehrzahl der Zahnreinigungselemente (140) Bürstenbüschel (141a, 141b) mit ersten Abschnitten (146) umfasst, die durch Löcher in der Kopfplatte (131) eingesetzt und verschmolzen werden, um nahe der Rückseite der Kopfplatte (131) eine Schmelze herzustellen und, zweite Abschnitte (147), die von der Stirnfläche der Kopfplatte abstehen, wobei optional die Schmelze (148) zwischen der Kopfplatte (131) und dem Boden des Sockels (114) angeordnet ist.

11. Mundpflegeeinheit (100) nach Anspruch 10, wobei die zweiten Abschnitte (147) der Bürstenbüschel aus einem Material einer dritten Farbe ausgebildet werden, wobei die dritte Farbe sich von der ersten Farbe unterscheidet.

12. Mundpflegeeinheit (100) nach einem der Ansprüche 10 bis 12, wobei die Mehrzahl der Zahnreinigungselemente (140) weiter elastomere Elemente (142) umfasst, und wobei die Schmelze (148) den Grundabschnitt der elastomeren Elemente überdeckt, wobei optional zumindest eines der Bürstenbüschel (141a, 141b) einen dritten Abschnitt (149) umfasst, der ein distales Ende des zumindest einen Bürstenbüschels ausbildet, wobei der dritte Abschnitt eine vierte Farbe hat, und wobei die vierte Farbe sich von der dritten Farbe unterscheidet, wobei optional die vierte Farbe dieselbe ist wie die erste Farbe.

13. Mundpflegeeinheit (100) nach einem der Ansprüche 8 bis 12, wobei die Mehrzahl der Zahnreinigungselemente (140) elastomere Elemente (142) umfasst, die auf die Kopfplatte (131) spritzgegossen werden.

14. Mundpflegeeinheit (100) nach Anspruch 13, wobei die elastomeren Elemente (142) aus einem Material einer fünften Farbe ausgebildet werden, wobei die fünfte Farbe sich von der ersten Farbe unterscheidet.

15. Mundpflegeeinheit (100) nach einem der Ansprüche 8 bis 14, wobei die Umfassung der Kopfplatte (131) eine einwärts abgesetzte Oberfläche umfasst und die Umfassung der Sockel (114) eine auswärts abgesetzte Oberfläche umfasst, und wobei die einwärts abgesetzte Oberfläche der Umfassung der Kopfplatte sich mit der auswärts abgesetzten Oberfläche der Umfassung des Sockels verbindet, wodurch die mehrfarbige Verbindung gebildet wird, wobei optional die auswärts abgesetzte Oberfläche eine schräge Absatzfläche (126) umfasst und die einwärts abgesetzte Oberfläche eine gerillte Absatzfläche (151) umfasst, und wobei die gerillte Absatzfläche nahe der schrägen Absatzfläche positioniert wird, wenn die mehrfarbige Verbindung ausgebildet wird, wobei optional ein Spalt zwischen gerillter Absatzoberfläche und der schrägen Absatzoberfläche vorhanden ist.

## Revendications

1. Procédé de formation d'une tête d'un accessoire de soins buccaux (100), le procédé comprenant :
a) la formation d'une plaque (131) de tête d'une matière d'une première couleur ;
b) le montage d'une pluralité d'éléments (140) de nettoyage des dents sur la plaque de tête, formant ainsi un ensemble (130) d'éléments de nettoyage ;
c) la formation d'un corps support (112), le corps support (112) comprenant une alvéole (114) ;
d) la formation d'une interface (113) entre un périmètre de la plaque (131) de tête et un périmètre de l'alvéole (114) en positionnant la plaque (131) de tête de l'ensemble (130) d'éléments de nettoyage dans l'alvéole (114) du corps support (112) ; et
e) la fixation de la plaque (131) de tête au corps support (112), formant ainsi la tête (120) de l'accessoire de soins buccaux ;
**caractérisé en ce que** le corps support (112) est d'une matière d'une deuxième couleur, la deuxième couleur étant différente de la première couleur, et **en ce que** l'interface (113) est une interface à couleurs multiples.

2. Procédé selon la revendication 1, dans lequel l'étape e) comprend en outre la fusion de la plaque (131) de tête sur le corps support (112) le long d'au moins une partie de l'interface (113) à couleurs multiples, facultativement dans lequel l'étape e) comprend en outre le soudage par ultrasons de la plaque (131) de tête sur le corps support (112).

3. Procédé selon la revendication 1 ou 2, dans lequel la pluralité d'éléments (140) de nettoyage des dents comprennent des touffes de soies (141a, 141b), et dans lequel l'étape b) comprend en outre :
b-1) l'insertion de premières parties (146) des touffes de soies (141a, 141b) à travers des trous dans la plaque (131) de tête, des deuxièmes parties (147) des touffes de soies se projetant depuis une surface avant de la plaque de tête ; et
b-2) la fusion des premières parties (146) des touffes de soies ensemble pour former un mat (148) adjacent à une surface arrière de la plaque (131) de tête,
facultativement dans lequel l'étape d) comprend en outre le positionnement de la plaque (131) de tête de l'ensemble (130) d'éléments de nettoyage dans l'alvéole (114) du corps support (112) de telle manière que le mat est situé entre la plaque (131) de tête et le corps support (112).

4. Procédé selon la revendication 3, dans lequel les deuxièmes parties des touffes de soies (141a, 141b) sont formées d'une matière ayant une troisième couleur, la troisième couleur étant différente de la première couleur, facultativement dans lequel au moins une des touffes de soies (141a, 141b) comprend une troisième partie (149) formant une extrémité distale de l'au moins une touffe de soies (141a), la troisième partie étant une quatrième couleur, la quatrième couleur est différente de la troisième couleur, facultativement dans lequel la quatrième couleur est la même que la première couleur.

5. Procédé selon l'une quelconque des revendications 1 à 4, dans lequel la pluralité d'éléments (140) de nettoyage des dents comprennent des éléments élastomériques (142), et dans lequel l'étape b) comprend en outre le moulage par injection des éléments élastomériques sur la plaque (131) de tête, facultativement dans lequel les éléments élastomériques (142) sont formés d'une matière d'une cinquième couleur, la cinquième couleur étant différente de la première couleur.

6. Procédé selon l'une quelconque des revendications 1 à 5, dans lequel le périmètre de la plaque (131) de tête est formé par une surface en marche vers l'intérieur et le périmètre de l'alvéole (114) est formé par une surface en marche vers l'extérieur, et dans lequel l'étape d) comprend en outre la formation de l'interface (113) à couleurs multiples en mettant en correspondance la surface en marche vers l'intérieur et la surface en marche vers l'extérieur.

7. Procédé selon la revendication 6, dans lequel la surface en marche vers l'extérieur comprend une surface de rebord incliné (126) et la surface en marche vers l'intérieur comprend une surface de rebord rainuré (151), et dans lequel l'étape d) comprend en outre le positionnement de la surface de rebord rainuré adjacente à la surface de rebord incliné.

8. Accessoire de soins buccaux (100) comprenant :
une poignée (110) ; et
une tête (120) comprenant :
un ensemble (130) d'éléments de nettoyage préformé ayant une plaque (131) de tête et une pluralité d'éléments (140) de nettoyage des dents montés sur la plaque de tête, la plaque de tête formée d'une matière ayant une première couleur ;
un corps support (112) ayant une alvéole (114) ;
une interface (113) formée entre un périmètre de l'alvéole (114) et un périmètre de la plaque (131) de tête ; et
la plaque (131) de tête fusionné sur le corps support (112) le long d'au moins une partie de l'interface ;
**caractérisé en ce que** le corps support (112) est formé d'une matière ayant une deuxième couleur, et **en ce que** l'interface (113) est une interface à couleurs multiples.

9. Accessoire de soins buccaux (100) selon la revendication 8, dans lequel la plaque (131) de tête est soudée par ultrasons au corps support (112) le long d'au moins une partie de l'interface (113) à couleurs multiples.

10. Accessoire de soins buccaux (100) selon l'une quelconque des revendications 8 à 9, dans lequel la pluralité d'éléments (140) de nettoyage des dents comprennent des touffes de soies (141a, 141b) ayant des premières parties (146) qui sont insérées à travers des trous dans la plaque (131) de tête et fusionnées ensemble pour former un mat (148) adjacent à une surface arrière de la plaque de tête et des deuxièmes parties (147) se projetant depuis une surface avant de la plaque de tête, facultativement dans lequel le mat (148) est situé entre la plaque (131) de tête et un fond de l'alvéole (114).

11. Accessoire de soins buccaux (100) selon la revendication 10, dans lequel les deuxièmes parties (147) des touffes de soies sont formées d'une matière ayant une troisième couleur, la troisième couleur étant différente de la première couleur.

12. Accessoire de soins buccaux (100) selon l'une quelconque des revendications 10 à 11, dans lequel la pluralité d'éléments (140) de nettoyage des dents comprennent des éléments élastomériques (142), et dans lequel le mat (148) recouvre une partie de base des éléments élastomériques, facultativement dans lequel au moins une des touffes de soies (141a, 141b) comprend une troisième partie (149) formant une extrémité distale de l'au moins une touffe de soies, la troisième partie étant une quatrième couleur, et dans lequel la quatrième couleur est différente de la troisième couleur, facultativement dans lequel la quatrième couleur est la même que la première couleur.

13. Accessoire de soins buccaux (100) selon l'une quelconque des revendications 8 à 12, dans lequel la pluralité d'éléments (140) de nettoyage des dents comprennent des éléments élastomériques (142) qui sont moulés par injection sur la plaque (131) de tête.

14. Accessoire de soins buccaux (100) selon la revendication 13, dans lequel les éléments élastomériques (142) sont formés d'une matière d'une cinquième couleur, la cinquième couleur étant différente de la première couleur.

15. Accessoire de soins buccaux (100) selon l'une quelconque des revendications 8 à 14, dans lequel le périmètre de la plaque (131) de tête comprend une surface en marche vers l'intérieur et le périmètre de l'alvéole (114) comprend une surface en marche vers l'extérieur, et dans lequel la surface en marche vers l'intérieur du périmètre de la plaque de tête correspond à la surface en marche vers l'extérieur du périmètre de l'alvéole lorsque l'interface (113) à couleurs multiples est formée, facultativement dans lequel la surface en marche vers l'extérieur comprend une surface de rebord incliné (126) et la surface en marche vers l'intérieur comprend une surface de rebord rainuré (151), et dans lequel la surface de rebord rainuré est positionnée adjacente à la surface de rebord incliné lorsque l'interface à couleurs multiples est formée, facultativement dans lequel un espace existe entre la surface de rebord rainuré et la surface de rebord incliné.
